# EUROPEAN PATENT SPECIFICATION

(11) **EP 1 673 213 B1**
(45) Date of publication and mention of the grant of the patent: **04.02.2009**
(21) Application number: 04795013.4
(22) Date of filing: 13.10.2004
(51) Int. Cl.: B29D 11/00

(54) **Method of forming indicia on a lens**
Verfahren zur Bildung von Angaben auf einer Linse
Procédé de formation de caractère sur une lentille

(30) Priority: 14.10.2003 US 685108
(43) Date of publication of application: 28.06.2006
(73) Proprietor: BAUSCH & LOMB INCORPORATED, Rochester, New York 14604 (US)
(72) Inventor: BORDEN, Ronald, E., Hilton, NY 14468 (US); DERLETH-TERRANOVA, Susan, Rochester, NY 14622 (US)
(74) Representative: Maiwald, Walter
(86) International application number: PCT/US2004/033792
(87) International publication number: WO 2005/037530

(56) References cited:
- EP-A- 0 952 476
- WO-A-94/29764
- US-A1- 2001 013 921

## Description

### FIELD OF THE INVENTION

The present invention relates to the production of an improved contact lens with reduced splits proximate indicium or indicia on the surface of the contact lenses.

### BACKGROUND OF THE INVENTION

Proper identification of contact lenses is important. Since most contact lens wearers have a different prescription for each eye, the optical power of each contact lens often differs. In addition, the use of an identifying indicium or indicia on a contact lens can be used by the wearer not only as a means of distinguishing lenses from each other, but distinguishing one side of a lens from the other. For example, an indicium or indicia can be used as an inversion indicator to determine if the lens is being put in the eye correctly (i.e. with the proper side of the lens against the eye). Indicia, together, can form lot and batch numbers on the lenses for identification purposes.

Quality control personnel must be able to identify and orient the lens quickly for further inspection. Lens inspectors often have only a limited amount of time to inspect each lens. The lenses must therefore be oriented consistently to begin the inspection process. Often an indicium, or indicia on the lens, such as a logo, is used to orient the lens. Since each individual lens inspection must be done quickly, a highly visible indicium or indicia which assists the inspector in orienting the lens is important.

Many manufacturers chemically etch indicia into mold tools in order transfer the indicia to the contact lens. A mold tool is made of stainless steel or electroless nickel. The tool is shaped to the curvature of the anterior or posterior surface of the lens. The surface for receiving the indicia is masked with photoresist and openings in the resist correspond to the indicia of the lens. The mold tool is etched in an acid bath to remove material from the exposed surface of the tool. This results in a cavity in the surface of the mold tool that corresponds to the indicia. Next the mold tool is filled with a mold body material, typically polypropylene. The mold body receives a negative image of the mold tool and the indicia. The mold body is then filled with contact lens material and the indicia are molded into a surface of the lens. US 2001/0013921 describes a contact lens with an identifying mark.

Lens with indicia made using a chemical etch on the mold tool have a large number or splits and cracks either in the indicia or proximate the indicia. As such, many lens made from mold tools that are chemically etched are often discarded. We discovered that the cause of most splits and cracks is the chemical etch. Practically all chemical etches are isotropic. As such, the indicia are etched into the mold tool with a noticeable taper on their sidewalls. When the polypropylene or other mold material is removed from the mold tool, it carries a negative replica of the tapered indicia. In addition the acid leaves a rough surface on the mold tool. The taper and the roughness may retain some of the polypropylene when the mold body is removed, thereby worsening the roughness of the indicia surface in the mold body. These deficiencies may be repeated and exacerbated when the contact lens is removed from the mold body where the taper and the rough surface tend to hold the lens in the mold body. When mechanical force is applied to release the lens, the body of the lens develops cracks and splits on the tapered, rough portions that correspond to the indicia.

### SUMMARY OF THE INVENTION

We discovered that the problems of cracking and splitting in contact lenses with indicia could be reduced or eliminated by changing the method of etching the mold tool. We discovered that anisotropic etching would provide less tapered or nearly straight sidewalls and floors of the indicia and the surfaces were smooth. The preferred method of anisotropic etching was electrochemical etching using a bath of sodium chloride solution and a direct current source. However, those skilled in the art understand that other anisotropic etching methods may be used, including and not limited to reactive ion etching and plasma etching. The mold tool was connected to the anode and the surface of the tool was masked by conventional means. The indicia in the mold tool were transferred to a polypropylene mold body and from there to the contact lens. The problem of cracks and splits was virtually eliminated.

The invention provides a method of making lens mold tools, lens molds and lens according to claim 1.

The process for manufacturing a contact lens with indicia and for reducing cracks and splits in lens material in and proximate to the indicia begins with anisotropically removing metal from a metal mold tool to form indicia in the metal mold tool that correspond to indicia for a contact lens. This provides indicia with relatively parallel sidewalls and a floor that is transverse to the opposite sidewalls. Next the mold body is cast in the mold tool to provide a negative mold having the relatively smooth indicia of the metal mold tool. After the mold body is prepared, then the lens itself is cast in the mold body by convention methods that include filling the mold with a contact lens material and curing the contact lens material to form a contact lens with indicia having relatively smooth surfaces. The process provides molds tools and lenses wherein the indicia have sidewalls that are spaced apart substantially the same distance at the top and bottom of the indicia.

The invention provides a new lens that has a body of contact lens material with anterior and posterior surfaces and indicia extending from one or both surfaces into the body of the lens. The indicia are defined by sidewalls and a floor disposed at the end of the sidewalls and below the surface. The sidewalls that are spaced apart substantially the same distance at the surface and at the floor of the indicia. The sidewalls may have a slight taper of less than 10 degrees and the taper may be in one direction or the other.

### BRIEF DESCRIPTION OF THE DRAWING

FIG. 1 shows an assembly of a tool for making a lens mold.
FIG. 2 shows a portion of a lens mold tool with a patterned resist.
FIG. 3 shows the lens mold tool of FIG. 2 in as reaction vessel for etching the tool.
FIG. 4 shows is a partial view of the lens mold tool after etching.
FIG. 5 shows the etched tang on a static mold member.
FIG. 6 is a cross section view of a lens mold for molding indicia into the convex surface of a lens.
FIG. 7 is a cross section view a lens with a molded indicia in its surface.
FIG. 8a-8c are cross section views of lens tools made with isotropic etches.
FIG. 8d is a cross section view of lens tool made with an anisotropic etch.

### DETAILED DESCRIPTION OF THE INVENTION

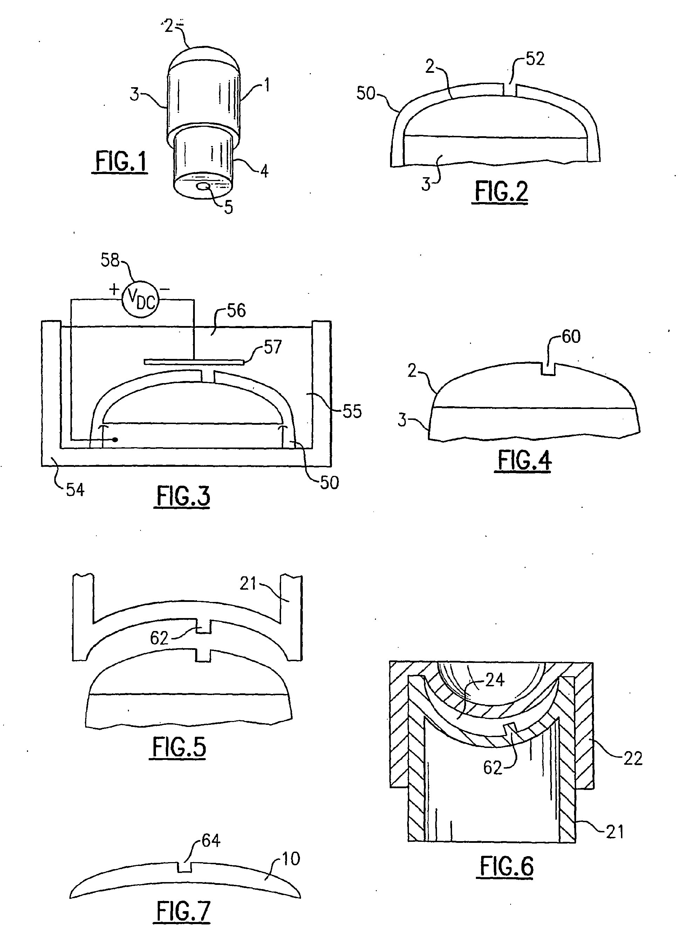

FIG. 1 illustrates a tool according to preferred embodiments of the present invention for making plastic contact lens molds. Tool 1 is constructed of a stainless steel or electroless nickel and comprises optically smooth molding surface 2 as a molding portion formed on the upper end of cylindrical head. 3.

The process for anisotropically etching the tool 1 is shown in FIGs. 2-4. The tool 1 is coated with a photoresist 50 that is patterned in a conventional manner to form openings 52 that correspond to desired indicia such as alignment marks, logos, etc. The tool 1 is then place in a reaction vessel 54 that includes a solution of sodium chloride and water 55. The vessel is made of nonconductive, acid resistant material such as glass, quartz or plastic. On electrode is connected to the tool and the other to an electrode suspended in the vessel proximate the surface to be etched. The tool 1 is connected to the anode terminal of a direct current source 58 and the vessel or an electrode suspended in the vessel is connected to the cathode of the source 58. When current is applied, the surface 2 of the tool is subjected to an electrochemical etch that etches the surface anisotropically. In other words, the etch process is stronger in one direction than in another. In this case, the etch process is stronger in a direction perpendicular to the surface 2. The process creates a profiled cavity 60 that has sidewalls and floor. The sidewalls are spaced apart about the same distance so that the sidewalls are substantially parallel to each other. The sidewalls are relatively smooth as compared to corresponding sidewalls of prior art chemically etched cavities. If desired, the electrical energy may be increased to "roughen" the floor of the cavity. A roughened floor will enhance visual perception of the indicia on the lens. A plastic mold is cast on the etched head 3 to provide the mold potion 21 with an etched tang as shown in FIG. 5.

The tool 1 is placed in a casting or injection molding machine. The tool 1 is injected with a suitable mold material, such as polypropylene, to create the molds for the contact lenses. It is more economical to mold contact lenses in disposable polypropylene molds than it is to manufacture metal molds. The polypropylene mold 21 receives a negative replica of the surface 2 and the cavity 60 to form raised indicia 62.

Accordingly, the tool 1 is designed to form a negative concave molding surface on multiple plastic contact lens molds. In turn, contact lenses can be produced in the plastic molds by conventional methods such as spincasting, static casting, or spincasting followed by lathe cutting one lens surface, wherein the convex lens surface of the contact lenses is formed from the concave molding surface of the plastic contact lens molds.

To further illustrate the present invention, a representative plastic mold assembly for static casting a contact lens is illustrated in FIGS. 6 and 7. Mold assembly 20 comprises generally cylindrical first mold 21 with tang 62 and generally cylindrical second mold 22. First mold 21 includes concave molding surface 23 and second mold 22 includes convex molding surface 24. When the mold parts are assembled as shown in FIG. 6, surfaces 23, 24 define cavity 25 in which contact lens 10 is molded. For the embodiment shown in FIG. 4, tool 1, which comprises convex molding surface 2, is suitable for the injection molding of first mold 21 wherein molding surface 2 of the tool is used to form molding surface 23 of the first mold. When the molds 21 and 22 are separated, the lens 10 has indicia 64 in its anterior surface.

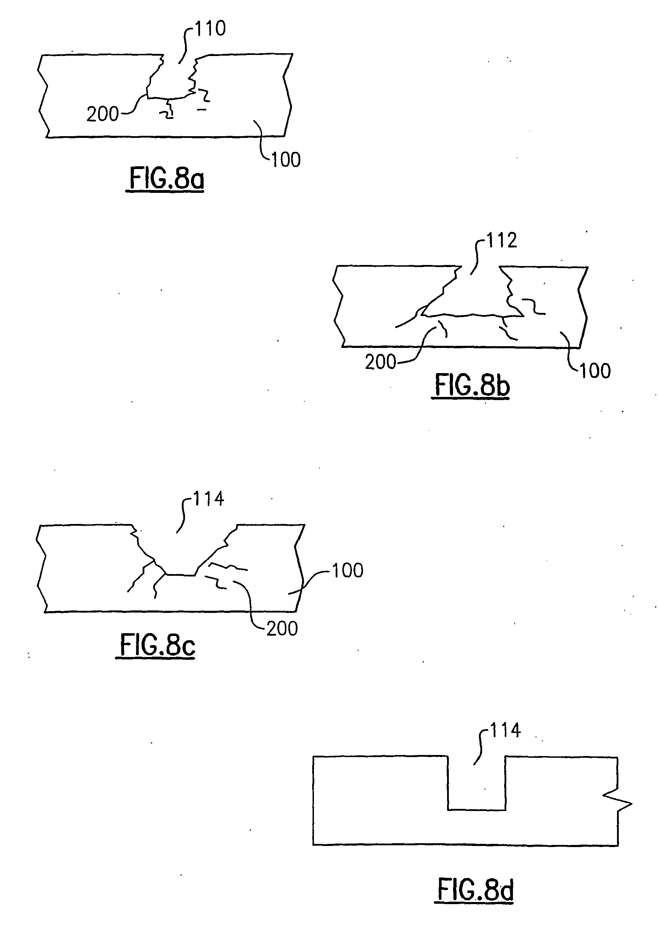

Prior art chemical etching results in rough or isotropic etching of indicia. Examples of prior art indicia in contact lenses are shown in FIGs 8a-8c. The prior art lens have cracks and splits 200 in the indicia or proximate the indicia. In contrast, lenses made from tools that were anisotropically etched, have relatively smooth, straight sidewalls and floors as shown in FIG. 8d. The sidewalls may have a slight taper and the taper may taper toward (positive) or away from (negative) the opening on the surface.

The process uses a sodium chloride solution for etching, but other nitrate or halide solutions are known to those skilled in the art, including and not limited to HCL and HNO3. See for example the method described in U. S. Patent Nos. 5,374,338 and 4,247,377. The depth of am etch depends upon the voltage, current, temperature and duration of the etch operation. One skilled in the art may calculate the expected depth or perform routine experiments to determine the parameters for an etch operation. The process of the invention has the following ranges of operation for stainless steel and electroless nickel when etched in a NaCl solution with a concentration range of 120 to 130grams per liter:

| Material | Voltage | Current | Time | Temperature | Depth |
|---|---|---|---|---|---|
| Stainless | 3V | .02-.03 | 10sec. | (75° F ±5°F) | 10µm ± 1µm |
| Steel | | | | 24°C ± 3°C | |
| Electroless | 3V | .02-.03 | 10sec | (75° F ±5°F) | 10µm ±1µm |
| Nickel | | | | 24°C ± 3°C | |

Although the method of the invention produces lenses with no tool etch defects, it was believed that the smooth surfaces of the indicia would be difficult to observe. However, the results were just the opposite of expectations. When lenses made with the invention were tested, the experimenters found that the lenses made with the inventive process had indicia that was more easily perceived than were lenses having conventional indicia.

The plastic contact lens molds may be molded from plastic resins known in the art, including thermoplastic resins such as polypropylene. The present method for making plastic contact lens molds are known in the art. For example, tool 1 of the described preferred embodiment may be provided with cylindrical lower base 4 such that the tool takes the form of an injection molding pin, and cavity 5 is provided for mounting the tool in the injection molding apparatus used to mold the plastic contact lens mold. As a further example, the tool of the present invention may be used as an optical insert in conjunction with a mold sleeve. Any other tools constituting the master mold may be formed of metal as in conventional molding methods.

## Claims

1. A process for manufacturing a contact lens with indicia and for reducing cracks and splits in the contact lens in and proximate the indicia comprising:
electrochemically removing metal from a metal mold tool to form anisotropic indicia in the metal mold tool that correspond to indicia for the contact lens;
casting a mold with the mold tool to provide a negative mold having the anisotropic indicia of the metal mold tool; and
filling the mold with a contact lens material and curing the contact lens material to form the contact lens with anisotropic indicia.

2. The process of claim 1 comprising the further steps of:
masking the mold tool with a resist material that has one or more openings corresponding to the shape of said indicia for the contact lens;
exposing the openings to a nitrate or halide solution; and
applying a DC voltage to the solution in order to anisotropically etch the metal in the openings.

3. The process of claim 2 wherein the DC voltage is about 3 volts.

4. The process of claim 2 wherein the solution is sodium chloride having a concentration of about 120 to 130 grams per liter.

5. The process of claim 2 wherein the mask material is photoresist and the indicia are exposed to light passing through transparent portions of an opaque mask.

6. The process of claim 2 wherein the indicia are formed by maskless exposure to a beam of radiation.

7. The process of claim 1 wherein the indicia in the metal mold tool have walls and a floor and wherein the walls are smooth and the floor is rough.

## Patentansprüche

1. Verfahren zur Herstellung einer Kontaktlinse mit Markierungen und zur Verminderung von Brüchen und Rissen in der Kontaktlinse, in oder in der Nähe der Markierungen, umfassend:
elektrochemisches Entfernen von Metall aus einem metallischen Formwerkzeug zur Bildung von anisotropen Markierungen in dem metallischen Formwerkzeug, welche den Markierungen für die Kontaktlinse entsprechen;
Gießen einer Form mit dem Formwerkzeug zur Herstellung einer negativen Form mit den anisotropen Markierungen des metallischen Formwerkzeugs; und
Füllen der Form mit einem Kontaktlinsenmaterial und Härten des Kontaktlinsenmaterials, um eine Kontaktlinse mit den anisotropen Markierungen zu bilden.

2. Verfahren gemäß Anspruch 1, als weitere Schritte umfassend:
Maskierung des Formwerkzeugs mit einem Abdeckmaterial, das eine oder mehrere Öffnungen hat, die der Form der genannten Markierungen für die Kontaktlinse entsprechen;
Aussetzen der Öffnungen einer Nitrat- oder Halogenidlösung; und
Anlegen einer Gleichspannung an die Lösung, um das Metall in den Öffnungen anisotrop abzulösen.

3. Verfahren gemäß Anspruch 2, wobei die Gleichspannung ungefähr 3 Volt beträgt.

4. Verfahren gemäß Anspruch 2, wobei die Lösung eine Natriumchloridlösung mit einer Konzentration von ungefähr 120 bis 130 Gramm pro Liter ist.

5. Verfahren gemäß Anspruch 2, wobei das Maskierungsmaterial ein Photolack ist und die Markierungen Licht ausgesetzt werden, das durch die durchlässigen Teile einer ansonsten undurchlässigen Maske fällt.

6. Verfahren gemäß Anspruch 2, wobei die Markierungen ohne Maskierung durch Einwirkung von Strahlung gebildet werden.

7. Verfahren gemäß Anspruch 1, wobei die Markierungen in dem metallischen Formwerkzeug Wände und einen Boden haben, und wobei die Wände glatt sind und der Boden rau ist.

## Revendications

1. Procédé de fabrication d'une lentille de contact portant des indications et pour réduire les craquelures et les fissures dans la lentille de contact dans et à proximité des indications, comprenant les étapes suivantes :
- enlever électrochimique de métal d'un outil de moule en métal pour former des indications anisotropiques dans l'outil de moule métallique qui correspondent aux indications pour la lentille :
- couler un moule avec l'outil de moule pour obtenir un moule négatif ayant les indications anisotropiques de l'outil de moule métallique ;
- remplir le moule avec le matériau de lentille de contact et traiter à chaud le matériau de lentille de contact pour former la lentille de contact avec des indications anisotropique.

2. Procédé selon la revendication 1, comportant les étapes supplémentaires suivantes :
- masquer l'outil de moule avec un matériau en résist qui a une ou plusieurs ouvertures correspondant à la forme desdites indications pour la lentille de contact ;
- exposer les ouvertures à une solution d'un nitrate ou d'un halide ;
- application d'une tension continue à la solution pour graver le métal dans les ouvertures.

3. Procédé selon la revendication 2 dans lequel la tension continue est d'environ 3 V.

4. Procédé selon la revendication 2 dans lequel la solution est une solution de chlorure de sodium avec une concentration d'environ 120 à 130 g par litre.

5. Procédé selon la revendication 2 dans lequel le matétiau de masquage est un photorésist et les indications sont exposées à de la lumière passant à travers les parties transparantes d'un masque opaque.

6. Procédé selon la revendication 2 dans lequel les indications sont formées par exposition sans masque à un rayon de radiation.

7. Procédé selon la revendication 1 dans lequel les indications dans l'outil de moule en métal ont des parois et un fond et dans lequel les parois sont lisses et le fond est rugueux.
